**Europäisches Patentamt**

**European Patent Office**

**Office européen des brevets**

(19)

(11) Veröffentlichungsnummer: **0 031 934**

**A1**

(12) # EUROPÄISCHE PATENTANMELDUNG

(21) Anmeldenummer: **80107976.5**

(22) Anmeldetag: **17.12.80**

(51) Int. Cl.³: **A 01 C 7/04**

(30) Priorität: **03.01.80 DE 3000111**

(43) Veröffentlichungstag der Anmeldung:
**15.07.81 Patentblatt 81/28**

(84) Benannte Vertragsstaaten:
**AT FR GB IT NL**

(71) Anmelder: **A.J. Tröster GmbH + Co KG**
**Kaiserstrasse**
**D-6308 Butzbach(DE)**

(72) Erfinder: **Hobein, Reinhard**
**Osterstrasse 34**
**D-3256 Coppenbrügge 1(DE)**

(74) Vertreter: **Gramm, Werner, Dipl.-Ing.**
**Patentanwälte Gramm + Lins Theodor-Heuss-Strasse 2**
**D-3300 Braunschweig(DE)**

(54) Einzelkornsämaschine.

(57) Die Erfindung betrifft eine Einzelkornsämaschin emit einem unter dem Ausfall(5) eines Saatgutbehälters (4) angeordneten Zellenrad (1), das auf seinem Umfang auf einer Kreislinie in gleichem Abstand voneinander angeordnete Samentaschen (6) zur Aufnahme je eines Saatkornes aufweist und mit einem koaxial angeordneten Ringelement (8) drehfest verbunden ist, das in seiner Mantelfläche auf einer Kreislinie in gleichem Abstand voneinander angeordnete Ausnehmungen (9) für Granulat (2) aufweist und an den Auslauf (11) eines Granulatbehälters (10) angeschlossen ist.

Als neu wird in erster Linie angesehen, daß das Ringelement (8) einen inneren, allseitig geschlossenen Hohlraum (13) aufweist, in den der Auslauf (11) des Granulatbehälters (10) mündet, daß die im Ringelement (8) vorgesehenen Ausnehmungen für das Granulat (2) als Granulat-Auslauföffnungen (9), ausgebildet sind, die unmittelbar in den inneren Hohlraum (13) des Ringelementes münden, und dass das Zellenrad (1) mit seinem Ringelement (8) mantelseitig von einem stationären Zellenradgehäuse (14) umschlossen ist, das in seinem untersten Bereich einen Ausfallschlitz aufweist, dessen Öffnungswinkel nur so groß ist, daß sich eine punktförmige Granulatablage ergibt.

EP 0 031 934 A1

./...

Fig.1

Patentanwälte GRAMM + LINS

0031934

Dipl.-Ing. Werner Gramm
Dipl.-Phys. Edgar Lins

D-3300 Braunschweig

- 1 -

A. J. Tröster GmbH + Co KG

Kaiserstraße

6308 Butzbach

"Einzelkornsämaschine"

Die Erfindung betrifft eine Einzelkornsämaschine mit einem
unter dem Ausfall eines Saatgutbehälters angeordneten Zellenrad, das auf seinem Umfang auf einer Kreislinie in gleichem
Abstand voneinander angeordnete Samentaschen zur Aufnahme je
eines Saatkornes aufweist, um eine horizontale Drehachse umläuft und mit einem koaxial angeordneten Ringelement angenähert
gleichen Durchmessers drehfest verbunden ist, das in seiner
Mantelfläche auf einer Kreislinie in gleichem, dem Winkelabstand der Samentaschen entsprechenden Abstand voneinander angeordnete Ausnehmungen für Granulat aufweist und an den Auslauf eines Granulatbehälters angeschlossen ist.

Eine derartige Ausführungsform läßt sich dem DE-GM 72 42 336
entnehmen. Bei der hier offenbarten Vorrichtung erfolgt die
Granulatzufuhr in die entsprechenden Ausnehmungen des Zellenrades von außen. Dieser bekannten Konstruktion haften mehrere
Nachteile an:

Umfangreiche Versuche haben gezeigt, daß bei punktförmiger
Granulatablage der Abstand des Granulats von dem jeweils zugeordneten Saatkorn möglichst gering sein soll; der Abstand
sollte zwischen 2 und 20 mm liegen. Derart geringe Abstände

- 2 -

sind mit der vorbekannten Ausführungsform nicht erreichbar, da
wegen der Außenbefüllung sowohl der Saatkörner als auch des Granulats eine die beiden Materialien voneinander trennende Trennwand vorgesehen sein muß (siehe DE-GM 72 42 336, Figur 7, Bezugszeichen 75), die bis an die äußere Mantelfläche des Zellenrades bzw. des mit diesem verbundenen Ringelementes herangeführt
und gegenüber der genannten Mantelfläche abgedichtet werden muß.

Die Korngröße des Granulats ist um ein Vielfaches geringer als
die der Saatkörner. Bei Außenbefüllung des Granulats muß daher
zwischen Zellenrad und Zellenradgehäuse ein sehr viel kleinerer
Luftspalt eingehalten werden, als dies unter Berücksichtigung
nur der Saatkörner notwendig wäre. Aber auch bei Einhaltung sehr
enger Toleranzen läßt sich nicht vermeiden, daß bei der Außenbefüllung des Granulats einzelne Granulatkörner in den genannten
Ringspalt eindringen und hier durch Schmirgeleffekt zu einem
schnellen und hohen Verschleiß führen.

Der Erfindung liegt somit die Aufgabe zugrunde, die vorbekannte
Einzelkornsämaschine hinsichtlich eines engeren Abstandes zwischen den Samentaschen und den zugeordneten Ausnehmungen für
Granulat zu verbessern und den durch die Granulat-Zufuhr bedingten Verschleiß erheblich zu reduzieren.

Diese Aufgabe wird gemäß der Erfindung durch die im Kennzeichen
des Hauptanspruchs aufgeführten Merkmale gelöst. Demnach wird
die Erfindung in erster Linie darin gesehen, daß das Granulat in
einen inneren Hohlraum des Ringelementes bzw. des Zellenrades geleitet wird, von wo es überwiegend unter Einwirkung der Schwerkraft durch die Granulat-Auslauföffnungen austritt. Da eine
punktförmige Granulat-Ablage angestrebt wird, muß sichergestellt
werden, daß das Granulat nur über einen sehr kurzen Winkelweg
austreten kann. Dies wird erfindungsgemäß durch entsprechende Bemessung des Öffnungswinkels eines im Zellenradgehäuse vorgesehe-

nen Ausfallschlitzes erreicht. Die aufgrund des Füllgrades des Zellenrades bzw. des Ringelementes über einen großen Winkelweg mit dem Granulat in Verbindung stehenden Ausfallöffnungen werden also durch das Zellenradgehäuse so lange verschlossen, bis diese Auslauföffnungen den genannten Ausfallschlitz überstreichen. Erfindungsgemäß erfolgt also keine Vorportionierung der jedem Saatkorn zuzuordnenden Granulatmenge, sondern die Granulatdosierung erfolgt durch eine Art Schlitzsteuerung.

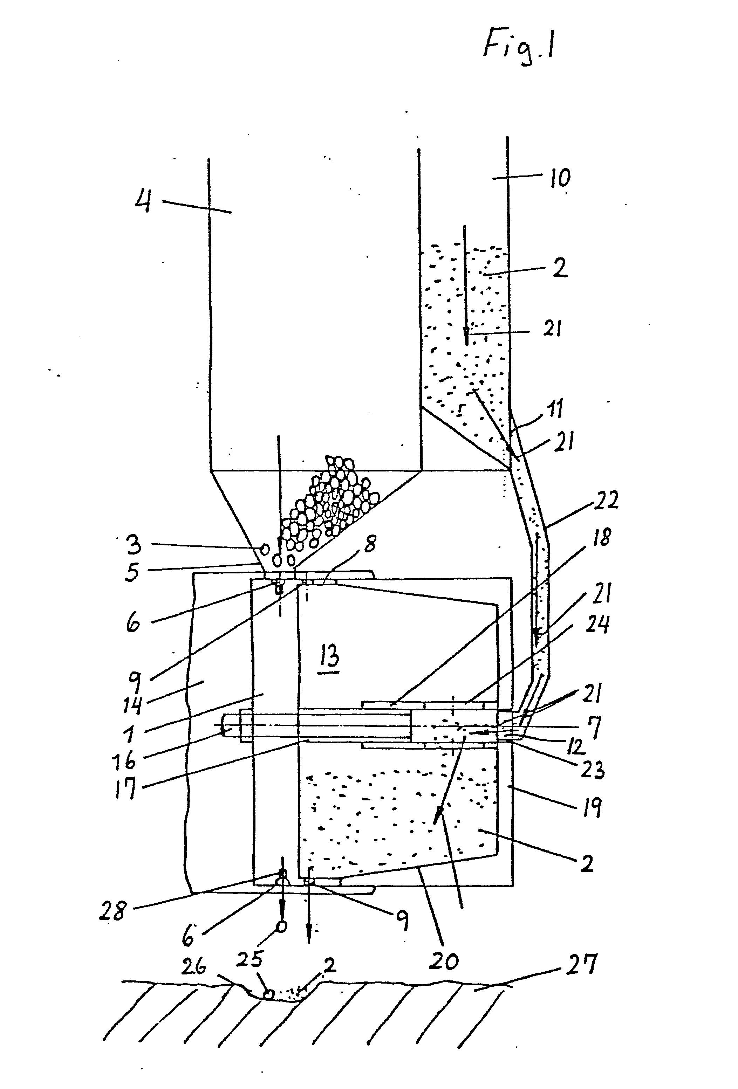

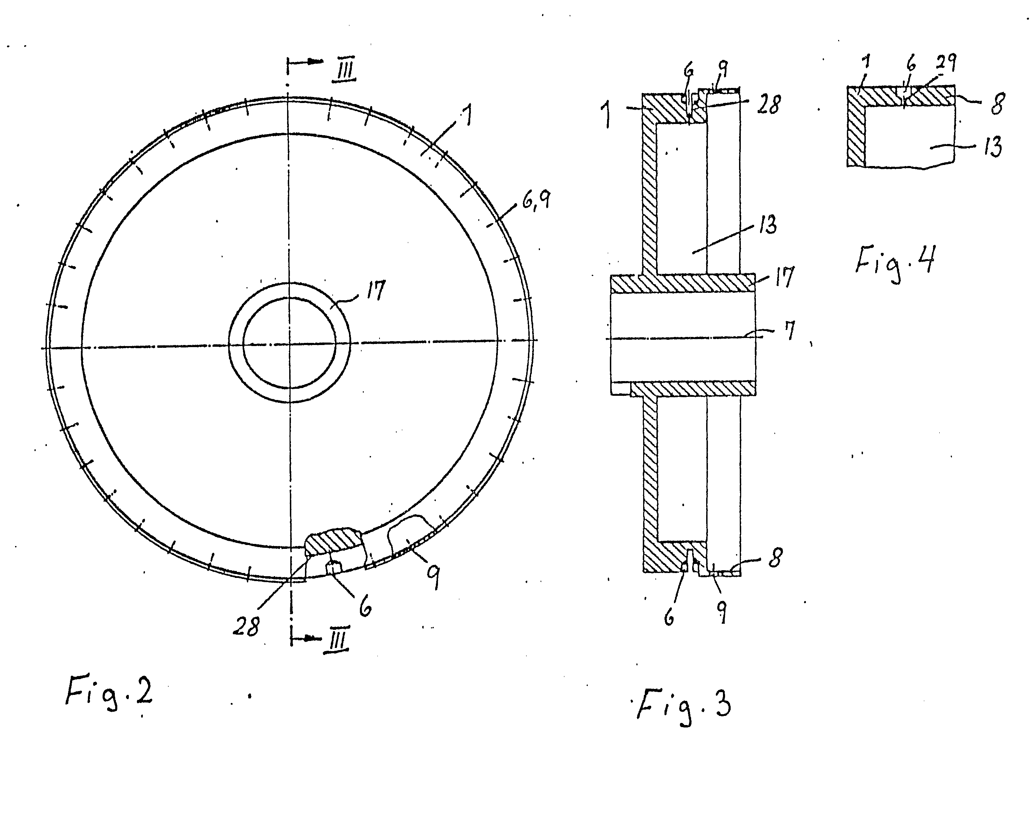

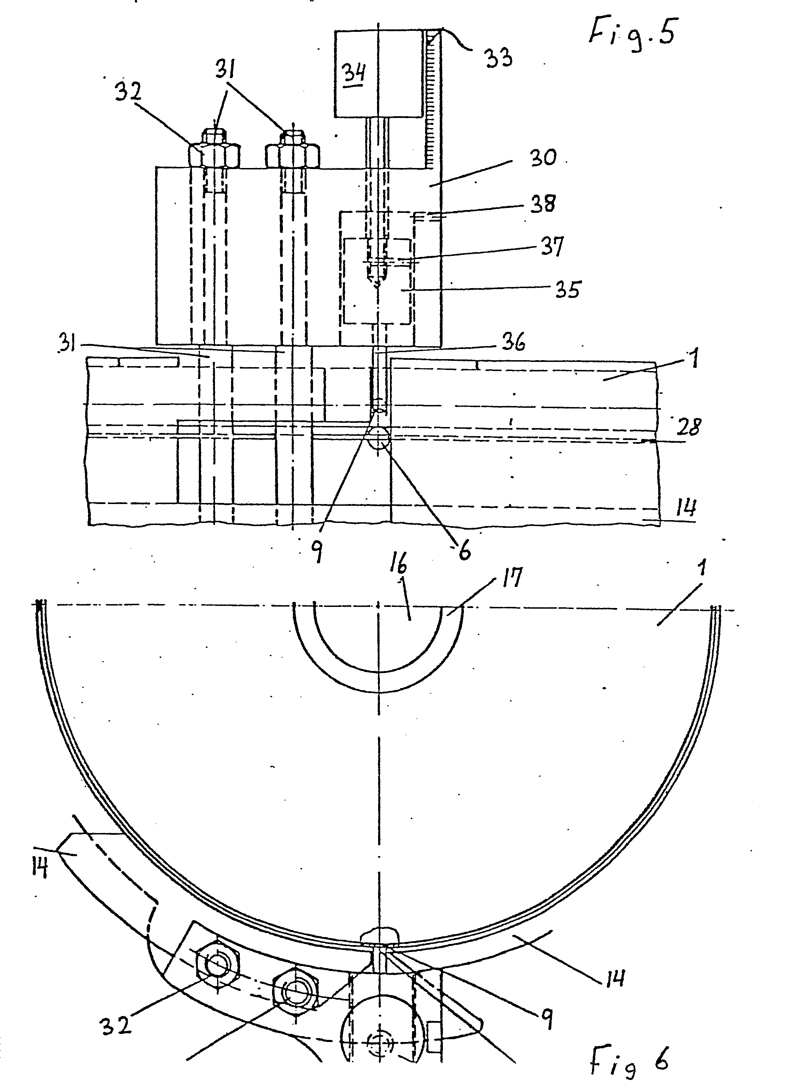

Die DE-PS 838 082 offenbart eine Ausgabevorrichtung für Körner, Samen o.dgl.. Eine umlaufende Scheibe weist einen ringförmigen Rand auf, in dem Ausnehmungen vorgesehen sind, die nach innen offen, nach außen hingegen geschlossen (Abbildungen 1 und 2) oder aber nach außen offen und nach innen geschlossen sind (Abbildungen 5 bis 8). In jedem Fall handelt es sich um kalibrierte Ausnehmungen, die jeweils so bemessen sind, daß sie nur ein einziges Saatkorn aufzunehmen vermögen. Während bei dem einen Lösungsvorschlag (Abbildung 2) die zuvor vereinzelten Saatkörner hochgefördert und von oben in einen als Rinne ausgebildeten Rohrstutzen abgeworfen werden, werden bei dem Ausführungsbeispiel gemäß Abbildung 6 die vereinzelten Saatkörner über einen Drehwinkel von ca. 300° im Außenumfang der genannten Scheibe mitgenommen und dann ausgeworfen. Dabei stellt der in der Abbildung 6 mit dem Bezugszeichen 11 gekennzeichnete Rohrstutzen lediglich eine Auswurföffnung dar, durch die keine Zumessung der ausgebrachten Kornmenge erfolgt.

Im Prinzip entspricht somit die vorbekannte Innenbefüllung dem bei der Außenbefüllung angewandten Verfahren, da in beiden Varianten kalibrierte, nur einseitig offene Ausnehmungen Verwendung finden, die mit dem auszubringenden Saatgut befüllt werden. Daher führt auch eine Kombination des DE-GM 72 42 336 mit der DE-PS 838 082 nicht zum Anmeldungsgegenstand.

- 4 -

Erfindungsgemäß besteht nunmehr auch die Möglichkeit, das Zellenrad mit seinem Ringelement einteilig auszubilden und so einen sehr kleinen Abstand zwischen Samentasche und Granulat-Auslauföffnung zu erreichen.

Die Korngröße des auszubringenden Granulats kann unterschiedlich sein. Es ist daher erforderlich, den Querschnitt der Granulat-Auslauföffnungen der jeweiligen Korngröße anzupassen. Um - insbesondere bei einteiliger Ausbildung von Zellenrad und Ringelement - zu vermeiden, daß der Benutzer der Einzelkornsämaschine bei unterschiedlichen Granulaten jedes Mal das komplette Zellenrad mit Ringelement gegen ein Bauteil mit anderen Granulat-Auslauföffnungen austauschen muß, ist es vorteilhaft, zur Veränderung des freien Querschnitts der Granulat-Auslauföffnungen eine Verstellvorrichtung vorzusehen, die in einer speziellen Ausführungsform gemäß Anspruch 4 ausgebildet sein kann.

Weitere Merkmale der Erfindung sind Gegenstand der Unteransprüche.

- 5 -

In der Zeichnung sind einige als Beispiele dienende Ausführungsformen der Erfindung dargestellt. Es zeigen:

Figur 1    in schematischer Darstellung einen Längsschnitt durch eine Einzelkornsämaschine;

Figur 2    in Draufsicht ein Zellenrad in abgewandelter
           Ausführungsform;

Figur 3    einen Schnitt gemäß der Linie III - III in Fig.2;

Figur 4    in einer abgewandelten Ausführungsform ein
           Detail aus der Darstellung gemäß Figur 3;

Figur 5    in Vorderansicht eine Verstellvorrichtung zur
           Veränderung des freien Querschnitts der Granulat-Auslauföffnungen;

Figur 6    die Darstellung gemäß Figur 5 in Draufsicht und

Figur 7    die Abbildung eines Zellenradgehäuses.

Bei der in Figur 1 dargestellten Einzelkornsämaschine wird ein
Zellenrad 1 mit einem Granulat 2, z.B. Temik 10 G innen befüllt
und mit Samen 3, z.B. Rübensamen, außen befüllt. Vorgesehen ist
ein Saatgutbehälter 4 mit einem Ausfall 5, unter dem das Zellenrad 1 angeordnet ist, das auf seinem Umfang auf einer Kreislinie
in gleichem Abstand voneinander angeordnete Samentaschen 6 zur
Aufnahme je eines Saatkornes 3 aufweist. Das Zellenrad 1 läuft
um eine horizontale Drehachse 7 um und ist mit einem koaxial angeordneten Ringelement 8 angenähert gleichen Durchmessers drehfest verbunden, das in seiner Mantelfläche auf einer Kreislinie
in gleichem, dem Winkelabstand der Samentaschen 6 entsprechenden

- 6 -

Abstand voneinander angeordnete Ausnehmungen 9 für das Granulat 2 aufweist. Letzteres ist in einem vom Saatgutbehälter 4 abgeteilten Granulatbehälter 10 bevorratet, dessen Auslauf 11 über eine in der horizontalen Drehachse 7 des Zellenrades 1 liegende Zuführöffnung 12 in den inneren Hohlraum 13 des Ringelementes 8 mündet.

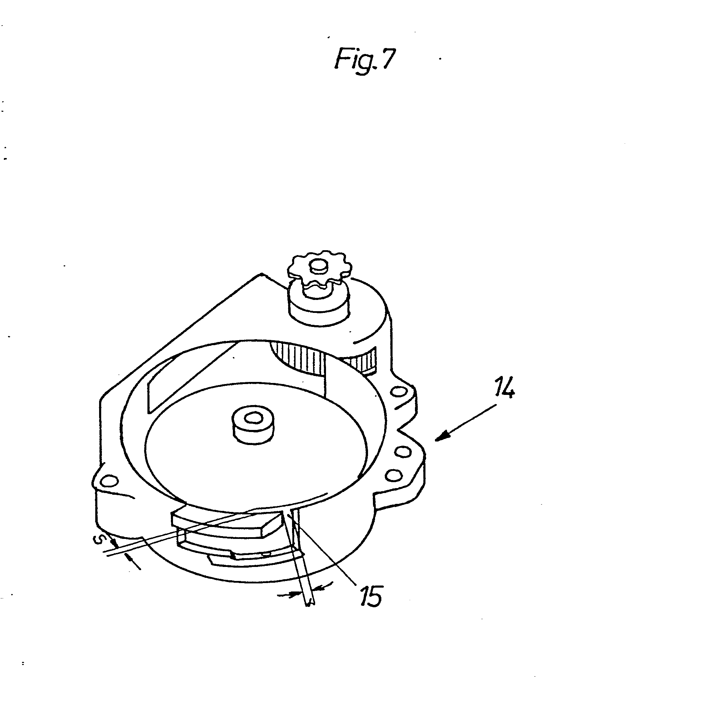

Das Zellenrad 1 ist mit seinem Ringelement 8 mantelseitig von einem stationären Zellenradgehäuse 14 umschlossen, das in seinem untersten Bereich einen Ausfallschlitz 15 aufweist, dessen Öffnungswinkel $\alpha$ (siehe Figur 7) nur so groß ist, daß sich eine punktförmige Granulatablage ergibt.

Der Antrieb des Zellenrades 1 erfolgt über eine Achse 16, die mit einer Nabe 17 des Zellenrades 1 verbunden ist, die wiederum mit einer Nabe 18 eines Deckels 19 verbunden ist, der in das Ringelement 8 mit einem ringförmigen Bund eingreift, der sich auf seiner inneren Mantelfläche 20 zum freien Rand hin konusförmig erweitert und sich bis in die Nähe der als Granulat-Auslauföffnungen 9 ausgebildeten Ausnehmungen für das Granulat 2 erstreckt.

Die Befüllung der Samentaschen 6 erfolgt von außen, wobei der Samen 3 auf dem Zellenrad 1 lastet und in die Samentaschen 6 fällt. Das Granulat 2 rieselt aus dem Auslauf 11 des Granulatbehälters 10 in Richtung des Pfeiles 21 durch ein Füllrohr oder einen Füllschlauch 22, der über ein Drucklager 23 mit dem Deckel 19 und seiner Nabe 18 verbunden ist, und schließlich durch Nabenöffnungen 24 (-Schlitze) auf das im inneren Hohlraum 13 bzw. im Hohlraum des Deckels 19 bevorratete Granulat 2. Wenn die Granulat-Auslauföffnungen 9 freigegeben werden, fällt - bestimmt durch die Parameter-Ausfallweg s und Öffnungswinkel $\alpha$ (siehe Figur 7) - Granulat 2 aus den Granulat-Auslauföffnungen 9 heraus.

Gleichzeitig fällt ein Saatkorn 25 (Pille) aus der Samentasche 6 heraus.

Die auf dem Umfang des Zellenrades 1 in gleichen Abständen angebrachten Samentaschen 6 und die Granulat-Auslauföffnungen 9 liegen auf den Mittelachsen und achsparallel nebeneinander. Deshalb fallen das Saatkorn 25 sowie das Granulat 2 zur gleichen Zeit heraus und werden somit punktappliziert. Dabei unterstützt der konische Verlauf der inneren Mantelfläche 20 des Deckels 19 die Granulatzuführungen zu den Granulat-Auslauföffnungen 9. Im Abstand von einigen Millimetern fallen Saatkorn und Granulat in die Saatfurche 26 des Bodens 27.

Das in den Figuren 2 und 3 dargestellte Zellenrad 1 entspricht im wesentlichen der in Figur 1 schematisch dargestellten Ausführungsform, wobei allerdings der Deckel 19 nicht dargestellt ist. Das Zellenrad ist mit seinem Ringelement 8 einteilig ausgebildet. Die Samentaschen 6 sind auf dem Umfang des Zellenrades 1 im gleichen Abstand angeordnet. Die Granulat-Auslauföffnungen 9 sind ebenfalls auf einer Kreislinie in gleichem, dem Winkelabstand der Samentaschen entsprechenden Abstand voneinander angeordnet und münden unmittelbar in den inneren Hohlraum 13 des Ringelementes 8. Dieser Hohlraum dient zur Granulat-Bevorratung. Im Zellenrad 1 ist eine kreisringförmige Nut 28 vorgesehen, in die die Samentaschen 6 münden. Die Nut 28 dient zur Führung eines in dieser Figur nicht dargestellten Auswerfers, der verklemmte Samen (Pillen) aus den Samentaschen 6 entfernen soll. Die Nabe 17 des Zellenrades 1 dient zur Befestigung des Deckels 19 (siehe Figur 1).

Bei der in Figur 4 dargestellten abgewandelten Ausführungsform münden die auf dem Umfang des Zellenrades 1 angeordneten Samentaschen 6 in Bohrungen 29 kleineren Durchmessers, die Granulat-Auslauföffnungen bilden und in den inneren Hohlraum 13 des Zellenrades münden. Wird die Samentasche 6 vom Zellenradgehäuse 14 freigegeben, fällt das angesammelte Granulat 2 aus den Bohrungen 29 nach. Die Ausfallmenge hängt im wesentlichen vom Öffnungswinkel $\alpha$ ab (siehe Figur 7). Aufgrund der Anordnung der Bohrungen 29 ist bei dieser Ausführungsform keine Nut für einen Auswerfer vorgesehen.

Die Figuren 5 und 6 zeigen eine Verstellvorrichtung zur Veränderung des freien Querschnitts der Granulat-Auslauföffnungen 9. Eine Konsole 30 ist mittels Kerbstiften 31 und Muttern 32 mit dem Zellenradgehäuse 14 verbunden. Die Konsole 30 dient zur Aufnahme einer Meßskala 33, einer Verstellspindel 34, eines Schiebers 35 und eines mit diesem verbundenen Abdeckelementes 36 in Form eines Kreissegments. Die Verstellspindel 34 ist mit dem Schieber 35 über einen Stift 37 drehbar verbunden, der durch eine Nut 38 eingeführt wird. Das schmale Endstück des kreissegmentförmig ausgebildeten Abdeckelementes 36 hat die Breite des Ausfallschlitzes 15 des Zellenradgehäuses 14. Durch Verdrehen der Verstellspindel 34 wird das Abdeckelement 36 über die Granulat-Auslauföffnung 9 des Zellenrades 1 verschoben. Dadurch wird der kreisförmige Querschnitt der Granulat-Auslauföffnung elliptisch verkleinert.

Figur 7 zeigt die Abbildung eines Original-Zellenradgehäuses 14, in dem der Ausfallschlitz 15 mit einem Öffnungswinkel $\alpha$ vorgesehen ist. Letzterer gibt an, auf wieviel Grad des Umfangs die Granulat-Auslauföffnungen 9,29 zum Ausfall freigegeben werden. Der Öffnungswinkel $\alpha$ bestimmt also die Öffnungszeit und somit die Ausfallmenge. Der Ausfallweg s ergibt sich aus der Differenz zwischen dem lichten Innendurchmesser des Zellenradgehäuses 14 und dem Außendurchmesser des Ringelementes 8, in dem die Granulat-Auslauföffnungen 9,29 angeordnet sind. Wird der Ausfallweg s zu groß, wird damit der Streubereich zu groß und es ergibt sich keine Punktablage.

# Patentanwälte GRAMM + LINS

**0031934**
Dipl.-Ing. Werner Gramm
Dipl.-Phys. Edgar Lins

D-3300 Braunschweig

A. J. Tröster GmbH + Co KG

Kaiserstraße

6308 Butzbach

Telefon:     (0531) 800 79
Telex:       09 52 620

Anwaltsakte 3950 DE Pt
Datum 16. Dezember 1980

Patentansprüche:

1. Einzelkornsämaschine mit einem unter dem Ausfall eines Saatgutbehälters angeordneten Zellenrad, das auf seinem Umfang auf einer Kreislinie in gleichem Abstand voneinander angeordnete Samentaschen zur Aufnahme je eines Saatkornes aufweist, um eine horizontale Drehachse umläuft und mit einem koaxial angeordneten Ringelement angenähert gleichen Durchmessers drehfest verbunden ist, das in seiner Mantelfläche auf einer Kreislinie in gleichem, dem Winkelabstand der Samentaschen entsprechenden Abstand voneinander angeordnete Ausnehmungen für Granulat aufweist und an den Auslauf eines Granulatbehälters angeschlossen ist, g e k e n n z e i c h n e t durch folgende Merkmale:

a) Das Ringelement ( 8 ) weist einen inneren, allseitig geschlossenen Hohlraum ( 13 ) auf, in den der Auslauf ( 11 ) des Granulatbehälters ( 10 ) mündet;

b) die im Ringelement ( 8 ) vorgesehenen Ausnehmungen für das Granulat ( 2 ) sind als Granulat-Auslauföffnungen (9,29) ausgebildet, die unmittelbar in den inneren Hohlraum ( 13 ) des Ringelementes münden;

- 2 -

- 2 -

c) das Zellenrad ( 1 ) ist mit seinem Ringelement ( 8 ) mantelseitig von einem stationären Zellenradgehäuse ( 14 ) umschlossen, das in seinem untersten Bereich einen Ausfallschlitz ( 15 ) aufweist, dessen Öffnungswinkel ( α ) nur so groß ist, daß sich eine punktförmige Granulatablage ergibt.

2. Einzelkornsämaschine nach Anspruch 1, dadurch gekennzeichnet, daß das Zellenrad ( 1 ) mit seinem Ringelement ( 8 ) einteilig ausgebildet ist.

3. Einzelkornsämaschine nach Anspruch 1 oder 2, gekennzeichnet durch eine Verstellvorrichtung (30-33) zur Veränderung des freien Querschnitts der Granulat-Auslauföffnungen (9,29).

4. Einzelkornsämaschine nach Anspruch 3, dadurch gekennzeichnet, daß im Ausfallschlitz ( 15 ) des Zellenradgehäuses ( 14 ) an letzterem ein Abdeckelement ( 36 ) verschiebbar gelagert ist, durch dessen Verstellung der den Ausfallschlitz in dem von den Granulat-Auslauföffnungen (9,29 ) überstrichenen Bereich mehr oder weniger verkleinert wird.

5. Einzelkornsämaschine nach einem der vorhergehenden Ansprüche, dadurch gekennzeichnet, daß der Auslauf ( 11 ) des Granulat-Behälters ( 10 ) über eine in der horizontalen Drehachse ( 7 ) des Zellenrades ( 1 ) liegende Zuführöffnung ( 12 ) in den inneren Hohlraum ( 13 ) des Ringelementes ( 8 ) mündet.

6. Einzelkornsämaschine nach einem der vorhergehenden Ansprüche, dadurch gekennzeichnet, daß das Ringelement ( 8 ) auf seiner

- 3 -

- 3 -

dem Zellenrad ( 1 ) abgewandten Seite über einen Deckel ( 19 ) verschlossen ist.

7. Einzelkornsämaschine nach Anspruch 6, dadurch gekennzeichnet, daß der Deckel ( 19 ) in das Ringelement ( 8 ) mit einem ringförmigen Bund eingreift, der sich auf seiner inneren Mantelfläche ( 20 ) zum freien Rand hin konusförmig erweitert und sich bis in die Nähe der Granulat-Auslauföffnungen (7,29) erstreckt.

Patentanwälte

G r a m m + L i n s

Gr/Gru.

3950 DE Pt
0031934

Fig.1

Fig. 2

Fig. 3

Fig. 4

17. 3950 DE Pt M

0031934

Fig. 5

31
32

34
33

30

38

37

35

31
36
1

28

14

9
6

16
17
1

14

32
14

9

Fig 6

0031934

Fig. 7

14

15

S

0031934

Nummer der Anmeldung

EP 80 10 7976.5

Europäisches
Patentamt

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D,A | DE – U – 7 242 336 (H. FÄHSE & CO.)<br><br>--- | | A 01 C  7/04 |
| D,A | DE – C – 838 082 (STE CIVILE D'ETUDES<br>ET DE RECHERCHES TECHNIQUES)<br><br>--- | | |
| A | FR – E – 67 063 (STE CIVILE D'ETUDES<br>ET DE RECHERCHES TECHNIQUES)<br><br>--- | | |
| A | BE – A – 694 678 (ETABLISSEMENTS<br>BEAUVAIS & ROBIN)<br><br>----- | | RECHERCHIERTE SACHGEBIETE (Int. Cl.³)<br><br>A 01 C  7/00 |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 24-03-1981 | SCHOFER |

EPA form 1503.1  06.78